# EUROPÄISCHE PATENTSCHRIFT

(11) **EP 2 303 780 B1**
(45) Veröffentlichungstag und Bekanntmachung des Hinweises auf die Patenterteilung: **26.09.2018**
(21) Anmeldenummer: 09757287.9
(22) Anmeldetag: 03.06.2009
(51) Int. Cl.: C01G 23/00, H01M 4/02, C01D 15/02, H01M 4/485, H01M 10/0525, H01M 10/42

(54) **VERFAHREN ZUR HERSTELLUNG VON LITHIUMTITAN-SPINELL**
PROCESS FOR PRODUCING LITHIUM TITANIUM SPINEL
PROCÉDÉ DE PRÉPARATION D'UN SPINELLE DE LITHIUM-TITANE

(30) Priorität: 03.06.2008 DE 102008026580
(43) Veröffentlichungstag der Anmeldung: 06.04.2011
(73) Patentinhaber: Johnson Matthey PLC, London EC4A 4AB (GB)
(72) Erfinder: HOLZAPFEL, Michael, 85354 Freising (DE); LAUMANN, Andreas, 80689 München (DE); NUSPL, Gerhard, 81543 München (DE); FEHR, Karl, 81371 München (DE); KIEFER, Florian, 80801 München (DE)
(74) Vertreter: Gee, Rachel Sarah
(86) Internationale Anmeldenummer: PCT/EP2009/003972
(87) Internationale Veröffentlichungsnummer: WO 2009/146904

(56) Entgegenhaltungen:
- FR-A- 2 874 603
- US-A1- 2007 281 211
- PROSINI P P ET AL: "Li4Ti5O12 as anode in all-solid-state, plastic, lithium-ion batteries for low-power applications" SOLID STATE IONICS, NORTH HOLLAND PUB. COMPANY. AMSTERDAM, NL, Bd. 144, Nr. 1-2, 1. September 2001 (2001-09-01), Seiten 185-192, XP004305622 ISSN: 0167-2738
- NAKAHARA K ET AL: "Preparation of particulate Li4Ti5O12 having excellent characteristics as an electrode active material for power storage cells" JOURNAL OF POWER SOURCES, ELSEVIER SA, CH, Bd. 117, Nr. 1-2, 15. Mai 2003 (2003-05-15), Seiten 131-136, XP004423377 ISSN: 0378-7753
- E: MATSUI, Y. ABE, M. SENNA, A. GUERFI, K. ZAGHIB: "Solid-State-Synthesis of 70 nm Li4Ti5O12 Particles by Mechanically Activating Intermediates with Amino Acids" J. AM. CERAM. SOC., Bd. 91, Nr. 5, Mai 2008 (2008-05), Seiten 1522-1527, XP002543495
- TOMIHA M ET AL: "Hydrothermal synthesis of alkali titanates from nano size titania powder" JOURNAL OF MATERIALS SCIENCE, KLUWER ACADEMIC PUBLISHERS, BO, Bd. 37, Nr. 11, 1. Juni 2002 (2002-06-01), Seiten 2341-2344, XP019209565 ISSN: 1573-4803
- D. FATTAKHOVA, P. KRTIL, V. PETRYKIN: "Solvothermal Synthesis of Electrochemically Active Nanocrystalline Li-Ti-O Spinel" MAT. RES. SOC. SYMP. PROC., Bd. 703, 2002, Seiten V3.26.1-V3.26.5, XP002543496
- CRUZ D ET AL: "Synthesis of Li2MO3 (M=Ti or Zr) by the combustion method" SOLID STATE SCIENCES, ELSEVIER, PARIS, FR, Bd. 8, Nr. 5, 1. Mai 2006 (2006-05-01), Seiten 470-475, XP025243737 ISSN: 1293-2558 [gefunden am 2006-05-01]

## Beschreibung

Die vorliegende Erfindung betrifft ein Verfahren zur Herstellung von dotiertem sowie undotiertem Lithiumtitanat Li₄Ti₅O₁₂.

Die Verwendung von Lithiumtitanat Li₄Ti₅O₁₂ oder kurz Lithiumtitan-Spinell wird seit einiger Zeit als Ersatz für Graphit als Anodenmaterial in wiederaufladbaren Lithium-Ionen-Batterien vorgeschlagen.

Eine aktuelle Übersicht über Anodenmaterialien in derartigen Batterien findet sich z.B. in Bruce et al., Angew.Chem.Int.Ed. 2008, 47, 2930-2946.

Die Vorteile von Li₄Ti₅O₁₂ gegenüber Graphit sind insbesondere dessen bessere Zyklenbeständigkeit, seine bessere thermische Belastbarkeit sowie die höhere Betriebssicherheit. Li₄Ti₅O₁₂ weist eine relativ konstante Potentialdifferenz von 1,55 V gegenüber Lithium auf und erreicht mehrere 1000 Lade- und Entladezyklen mit einem Kapazitätsverlust von <20 %.

Damit zeigt Lithiumtitanat ein deutlich positiveres Potential als Graphit, der bislang üblicherweise in wiederaufladbaren Lithium-Ionen-Batterien als Anode verwendet wird.

Allerdings ergibt sich durch das höhere Potential auch eine niedrigere Spannungsdifferenz. Zusammen mit einer verringerten Kapazität von 175 mAh/g verglichen mit 372 mAh/g (theoretischer Wert) von Graphit führt dies zu einer deutlich niedrigeren Energiedichte im Vergleich zu Lithium-Ionen-Batterien mit Graphitanoden.

Allerdings weist Li₄Ti₅O₁₂ eine hohe Lebensdauer auf und ist ungiftig und daher auch nicht als umweltgefährdend einzustufen.

Seit kurzem wird in Lithium-Ionen-Batterien LiFePO₄ als Kathodenmaterial verwendet, so dass in einer Kombination von Li₄Ti₅O₁₂ und LiFePO₄ eine Spannungsdifferenz von 2 V erzielt werden kann.

Die Herstellung von Lithiumtitanat Li₄Ti₅O₁₂ ist in vielerlei Hinsicht ausführlich beschrieben. Üblicherweise wird Li₄Ti₅O₁₂ mittels einer Festkörperreaktion zwischen einer Titanverbindung, typischerweise TiO₂, und einer Lithiumverbindung, typischerweise Li₂CO₃, bei hohen Temperaturen von über 750 °C erhalten (US 5,545,468). Dieser Hochtemperaturkalzinierschritt ist anscheinend nötig um relativ reines, gut kristallisierbares Li₄Ti₅O₁₂ zu erhalten, was jedoch den Nachteil mit sich bringt, dass zu grobe Primärpartikel erhalten werden und eine teilweise Versinterung des Materials auftritt. Das so erhaltene Produkt muss daher aufwendig vermahlen werden, was zu weiteren Verunreinigungen führt. Typischerweise entstehen durch die hohen Temperaturen auch oftmals Nebenprodukte wie Rutil bzw. Reste von Anatas, die im Produkt verbleiben (EP 1 722 439 A1).

Ebenso werden Sol-Gel-Verfahren für die Herstellung von Li₄Ti₅O₁₂ beschrieben (DE 103 19 464 A1). Dabei werden Organotitanverbindungen wie beispielsweise Titantetraisopropoxid oder Titantetrabutylat in wasserfreien Medien mit beispielsweise Lithiumacetat oder Lithiumethoxid zu Li₄Ti₅O₁₂ umgesetzt. Die Sol-Gel-Methoden erfordern jedoch die Verwendung von Titanausgangsverbindungen die weit teurer als TiO₂ sind und deren Titangehalt geringer ist als in TiO₂, so dass eine Herstellung von Lithiumtitanspinell mittels der Sol-Gel-Methode üblicherweise unwirtschaftlich ist, zumal das Produkt nach der Sol-Gel-Reaktion noch kalziniert werden muss, um Kristallinität zu erhalten.

Außerdem werden Herstellungsverfahren mittels Flammenpyrolyse (Flame Spray Pyrolysis) vorgeschlagen (Ernst, F.O. et al. Materials Chemistry and Physics 2007, 101(2-3) S. 372-378) sowie so genannte "Hydrothermalverfahren" in wasserfreien Medien (Kalbac, M. et al., Journal of Solid State Electrochemistry 2003, 8(1) S. 2-6).

Weitere Möglichkeiten Lithiumtitanat herzustellen, insbesondere mittels Festkörperverfahren, sind beispielsweise in der US 2007/0202036 A1 sowie dem US 6,645,673 beschrieben, weisen jedoch die schon vorstehend beschriebenen Nachteile auf, dass Verunreinigungen wie beispielsweise Rutil bzw. Reste von Anatas vorliegen, sowie weitere Zwischenprodukte der Festkörperreaktion wie Li₂TiO₃ etc.

Weiter wurde neben der Herstellung von nicht-dotiertem Li₄Ti₅O₁₂ auch die Herstellung und Eigenschaften von Al-, Ga- und Codotiertem Li₄Ti₅O₁₂ beschrieben (S. Huang et al. J. Power Sources 165 (2007), S. 408 - 412).

P. P. Prosini et al., Solid State Ionics, North Holland Pub. Company, Amsterdam NL, Bd. 144, Nr. 1-2, 1. September 2001, Seiten 185-192 beschreiben die Herstellung von Li₄Ti₅O₁₂ und die Verwendung desselben als Anodenmaterial in Lithiumionenbatterien.

D. Fattakhova et al., "Solvothermal Synthesis of Electrochemically Active Nanocrystalline Li-Ti-O Spinel, Mat. Res. Soc. Symp. Proc., Bd. 703, 2002, Seiten V3.26.1-V3.26.5 beschreiben die Herstellung von nanokristallinen Li-Ti-O-Spinellproben durch solvothermale Reaktion von TiO₂ mit Lithiumhydroxid in Wasser und Ethanol.

Es bestand daher ein Bedarf, ein alternatives Herstellungsverfahren für nicht-dotiertes und dotiertes Lithiumtitanat bereitzustellen, das insbesondere die Herstellung von phasenreinem, nicht-dotierten bzw. dotierten Lithiumtitanat ermöglicht.

Überraschenderweise wurde gefunden, dass dotiertes und nicht-dotiertes Lithiumtitanat Li₄Ti₅O₁₂ durch die thermische Umsetzung eines Kompositoxides enthaltend Li₂TiO₃ und TiO₂ erhalten werden kann. Das Verhältnis TiO₂/Li₂TiO₃ liegt dabei in einem Bereich von 1,3 bis 1,85, bevorzugt von 1,41 - 1,7, noch mehr bevorzugt von 1,51 - 1,7.

Das stöchiometrische Verhältnis TiO₂ zu Li₂TiO₃ im Kompositoxid liegt in einem Bereich um den theoretischen stöchiometrischen Wert von 1,5, was insbesondere an der Flüchtigkeit der Lithiumausgangsverbindung unter den gewählten Reaktionsbedingungen liegt, um ein phasenreines Produkt zu erhalten (s. z. B. Dokko et. al. Elektrochimica Acta 51 (2005) 966-971, Jiang et. al. Electrochimica Acta 52 (2007), 6470 - 6475, Huang et. al. Electrochem. Comm. 6 (2004), 1093 - 97, Hao et. al., J. Alloys and Compounds (2006) doi: 10.1016/j. jallcomm. 2006.08.082.

Bevorzugt wird ein leichter Überschuß der Lithiumverbindung eingesetzt, ganz besonders von ca. 4-10 % gegenüber dem theoretischen Wert. Ein leichter Unterschuß der Lithiumverbindung ist weniger bevorzugt, jedoch hängt der genaue Wert oft auch von der Reaktivität des TiO₂-Ausgangsproduktes ab, die von Hersteller zu Hersteller schwanken kann.

Im Falle der Herstellung von nicht-dotiertem Lithiumtitan-Spinell besteht das Kompositoxid nur aus diesen beiden Bestandteilen.

Der Begriff "Kompositoxid" bedeutet erfindungsgemäß, dass die Bestandteile des Kompositoxids eine vollständig homogene Mischung bilden, die durch eine chemische und/oder thermische Behandlung erreicht wird. Der erfindungsgemäße Begriff "Kompositoxid" wird also nicht für die rein mechanisch hergestellten Mischungen aus den entsprechenden Bestandteilen verwendet, da mechanisch üblicherweise keine vollständig homogenen Mischungen erhalten werden können.

Das erfindungsgemäß erhaltene Lithiumtitanat weist eine äußerst geringe Teilchengröße auf, was dazu führt, dass die Stromdichte in einer Anode die das erfindungsgemäß erhältliche Lithiumtitanat-Material enthält besonders hoch ist und wobei diese Anode weiter eine hohe Zyklenbeständigkeit aufweist.

Der Begriff "Lithiumtitanat" bzw. "erfindungsgemäß erhältliches Lithiumtitanat" bezieht sich vorliegend sowohl auf die nicht-dotierten als auch auf die dotierten Formen.

Ganz besonders bevorzugt ist das erfindungsgemäß erhältliche Lithiumtitanat phasenrein. Der Begriff "phasenrein" bzw. "phasenreines Lithiumtitanat" bedeutet erfindungsgemäß, dass im Endprodukt mittels XRD Messungen im Rahmen der üblichen Meßgenauigkeit keine Rutilphase nachweisbar ist. Anders ausgedrückt, ist das erfindungsgemäß erhältliche Lithiumtitanat in dieser bevorzugten Ausführungsform rutilfrei.

In bevorzugten Weiterbildungen der Erfindung ist das erfindungsgemäß erhältliche Lithiumtitanat mit wenigstens einem weiteren Metall dotiert, was zu einer weiter erhöhten Stabilität und Zyklenbeständigkeit bei Verwendung des dotierten Lithiumtitanats als Anode führt. Insbesondere wird dies mit dem Einbau von zusätzlichen Metallionen, ausgewählt aus Al, Mg, Ga, Fe, Co, Sc, Y, Mn, Ni, Cr, V bzw. mehrerer dieser Ionen in die Gitterstruktur erzielt. Ganz besonders bevorzugt ist dabei Aluminium. Auch die dotierten Lithiumtitanspinelle sind rutilfrei.

Die Dotierungsmetallionen, die entweder auf Gitterplätzen des Titans oder Lithiums sitzen können, sind bevorzugt in einer Menge von 0,05 bis 3 Gew.-%, bevorzugt 1-3 Gew.-%, bezogen auf den gesamten Spinell vorhanden.

Die Herstellung der dotierten Lithiumtitanspinelle ist weiter unten im Detail beschrieben.

Überraschenderweise wurde gefunden, dass das erfindungsgemäß erhältliche nicht-dotierte und dotierte Lithiumtitanat eine Teilchengröße d₉₀ ≤ 25 µm bei einer unvermahlenen Probe, d.h. direkt nach Umsetzung und Abtrennung (s.u.) aufweist und in REM Aufnahmen des Produkts keine Versinterungsphänomene zu beobachten sind. Besonders bevorzugt weist es eine Teilchengröße d₅₀ von ≤ 1 µm, ganz besonders bevorzugt im Bereich von 0,3-0,6 µm auf. Eine kleine Teilchengröße führt wie schon gesagt zu einer höheren Stromdichte und auch zu einer besseren Zyklenbeständigkeit, so dass das Lithiumtitanat auch ohne weitere mechanische Vermahlungsschritte als Bestandteil einer Anode in wiederaufladbaren Lithiumionenbatterien besonders vorteilhaft eingesetzt werden kann. Natürlich kann das erhaltene Produkt auch noch weiter fein vermahlen werden, sofern dies für eine spezifische Anwendung nötig sein sollte. Der Mahlvorgang wird dabei mit dem Fachmann an sich bekannten Methoden durchgeführt.

Überraschenderweise wurde ebenfalls gefunden, dass das erfindungsgemäß erhaltene dotierte und nicht-dotierte Lithiumtitanat eine relativ hohe BET-Oberfläche im Bereich von 2 - 15 m²/g aufweist.

Für das erfindungsgemäß erhältliche nicht-dotierte oder dotierte Lithiumtitanat mit den vorstehend beschriebenen Eigenschaften hat es sich als vorteilhaft herausgestellt, wenn das Li₂TiO₃ des Kompositoxides zu Beginn der Umsetzung in kubischer Phase vorliegt. Erfindungsgemäß liegt das TiO₂ des Kompositoxids in der Anatasmodifikation vor.

Beschrieben wird ferner ein Verfahren zur Herstellung eines Kompositoxids enthaltend x Teile Li₂TiO₃ und y Teile TiO₂ mit 0,1 ≤ x, y ≤ 4, wobei das Li₂TiO₃ in kubischer Phase vorliegt und das TiO₂ in Anatasmodifikation. Das Kompositoxid dient dabei als Ausgangsmaterial für das erfindungsgemäß erhältliche Lithiumtitanat.

In diesem Falle liegen die Bestandteile des Kompositoxids natürlich in den entsprechenden stöchiometrischen Mengen, beispielsweise 2 Teile Li₂TiO₃ und 3 Teile TiO₂, für die nachfolgende Umsetzung zum Lithiumtitanat vor. Wie schon gesagt, liegt das Verhältnis von TiO₂ zu Li₂TiO₃ des Kompositoxids für die nachfolgende Umsetzung in einem Bereich von 1,3 bis 1,85, bevorzugt im Bereich von 1,4 - 1,7. Grundsätzlich ist es erfindungsgemäß möglich, das Verhältnis der Komponenten des Kompositoxids so zueinander einzustellen, dass typischerweise alle Lithium-Titan-Spinelle vom Typ Li₁₊ₓTi₂₋ₓO₄ mit 0 ≤ x ≤ 1/3 der Raumgruppe Fd3m und generell auch sämtliche gemischten Lithium-Titan-Oxide der generischen Formel LiₓTi_{y}O (0 <x,y <1) bei der nachfolgenden thermischen Umsetzung (*vide infra*) erhalten werden können.

Sofern dotierte Spinelle hergestellt werden sollen, ist zusätzlich im Kompositoxid eine weitere - bevorzugt - metalloxidische Verbindung des/der Dotierungsmetalle vorhanden.

Das Verfahren zur Herstellung eines Kompositoxides umfasst dabei die Schritte des
a) Bereitstellen einer wässrigen Lösung von LiOH,
b) Optionales Zugeben einer Verbindung vor oder gleichzeitig mit der Zugabe von festem TiO₂, die Al, Mg, Ga, Fe, Co, Sc, Y, Mn, Ni, Cr, V oder Mischungen davon enthält,
c) Umsetzen der wässrigen Lösung von LiOH nach Zugabe von festem TiO₂ bei einer Temperatur im Bereich von 100-250°C über einen Zeitraum von 15 bis 25 Stunden.

Optional erfolgt der Schritt des
Abtrennens des durch die Umsetzung erhaltenen Produktes aus dem Schritt c)

Anstelle des optionalen Abtrennens z.B. mittels Filtration, etc. kann das Reaktionsprodukt bzw. die Suspension, die das Reaktionsprodukt enthält aus Schritt c) z.B. auch einer Spraypyrolyse unterzogen werden bzw. anderen dem Fachmann an sich bekannten Methoden der Produktisolierung.

Bevorzugt wird im Rahmen des erfindungsgemäßen Verfahrens das TiO₂ in seiner Anatasmodifikation eingesetzt.

Soll bei der nachfolgenden thermischen Umsetzung des Kompositoxids daraus ein dotierter Lithiumtitan-Spinell hergestellt werden, kann eine entsprechende Metallverbindung des Al, Mg, Ga, Fe, Co, Sc sowie Y, Mn, Ni, Cr, V entweder vor der Zugabe des TiO₂ bzw. gleichzeitig mit der Zugabe des TiO₂ zugegeben werden.

In letzterem Fall, also bei der gleichzeitigen Zugabe wird bevorzugt das entsprechende Metalloxid eingesetzt. Liegt die Metallverbindung schon vor Zugabe des TiO₂ in Lösung zusammen mit dem LiOH vor, kann entweder eine lösliche Metallverbindung wie ein Acetat, Nitrat und dergleichen verwendet werden die sich bei Reaktionstemperatur zu Hydroxid bzw. Oxid umsetzt, oder jedoch eine Suspension des entsprechenden Metalloxids. Es versteht sich, dass natürlich auch mehrere verschiedene Metalloxide bzw. Metallverbindungen der vorstehend genannten Metalle zugegeben werden können, um beispielsweise anschließend gemischt-dotierte Lithiumtitanspinelle zu erhalten. Das erfindungsgemäß erhältliche Kompositoxid enthält also in diesen Fällen neben den obengenannten beiden Hauptbestandteilen Li₂TiO₃ und TiO₂ noch entsprechende Metallverbindungen, insbesondere Oxide der vorgenannten Dotierungsmetalle.

Es ist weiter besonders vorteilhaft, dass die wässrige LiOH-Lösung während der Umsetzung in Schritt c) bei einer Temperatur von 100 - 250 °C gehalten wird, da dies die Umsetzung der Edukte zu dem erfindungsgemäß erhältlichen Kompositoxid enthaltend Li₂TiO₃ und TiO₂ besonders fördert. Bei einer zu geringen Temperatur treten im Endprodukt Verunreinigungen auf.

Erfindungsgemäß erfolgt die Umsetzung der Edukte über einen Zeitraum von 15-25 h.

Überraschenderweise wurde gefunden, dass das durch das erfindungsgemäße Verfahren erhältliche Kompositoxid enthaltend aus Li₂TiO₃ und TiO₂, das beispielsweise durch Filtern abgetrennt wird, in einer einheitlichen Partikelgröße im Bereich von 100 - 300 nm erhalten wird. Das abgetrennte Produkt wird dabei bei einer Temperatur von 70 bis 120°C getrocknet und beispielsweise mit einer Luftstrahlmühle vermahlen, was besonders einfach vonstatten geht, da überraschenderweise nur eine sehr geringe Agglomeration der erhaltenen Produktteilchen auftritt.

Das Verfahren zur Herstellung von dotiertem bzw. nicht-dotiertem Lithiumtitanat umfasst ein Sintern des Kompositoxids bei einer Temperatur von ≤ 750 °C. Ganz besonders bevorzugt erfolgt die Sinterung bei noch niedrigeren Temperaturen von ≤ 700 °C.

Es wurde überraschenderweise gefunden, dass im Gegensatz zu sämtlichen bisherigen Festkörpersyntheseverfahren für Lithiumtitanat eine viel niedrigere Temperatur und auch eine viel niedrigere Reaktionszeit gewählt werden kann und dennoch die Nachteile des Standes der Technik, insbesondere das Auftreten von weiteren Reaktionsprodukten vermieden werden können und Lithiumtitanat erhalten wird.

Bei der Herstellung von dotierten Lithiumtitanat ist zu beachten, dass neben der erfindungsgemäßen Umsetzung eines schon eine Dotierungsmetallverbindung bzw. ein Dotierungsmetalloxid enthaltenden Kompositoxids ebenso die Verbindung des Dotierungsmetalls nach der Synthese des (nicht dotierten) Lithiumtitanspinells oder auch des Kompositoxids in fester oder flüssiger Form (z.B. Tränken) zuzugeben und anschließend erneut zu erhitzen bzw. zu kalzinieren.

Eine rein mechanische Mischung bestehend z.B. aus Li₂TiO₃ und TiO₂ muss demgegenüber bei Temperaturen von mehr als 800-850 °C gesintert werden, wobei verschiedene Phasen und Produkte erhalten werden.

Typischerweise beträgt bei dem erfindungsgemäßen Verfahren die Dauer der Sinterung 1 bis 20 Stunden und ist damit bedeutend kürzer als bei herkömmlichen Festkörperverfahren bzw. gegenüber einer rein mechanischen stöchiometrischen Mischung beispielsweise beider Ausgangsverbindungen Li₂TiO₃ und TiO₂.

Im Rahmen der vorliegenden Erfindung kann vorteilhafterweise auf die Zugabe von starken Basen bei der Totalsynthese von Lithiumtitanat verzichtet werden, da das LiOH, das im ersten Syntheseschritt bei der Herstellung des erfindungsgemäßen Kompositoxids verwendet wird, als Base bzw. "Aktivator" wirkt.

Daher kann eine Totalsynthese von dotierten oder nicht-dotierten Lithiumtitanat ohne die Verwendung starker und auch korrosiv wirkender Basen wie NaOH oder KOH, wie sie bei den meisten vorstehend genannten nasschemischen oder Hydrothermalverfahren des Standes der Technik unabdingbar sind, bereitgestellt werden. Dies führt vorteilhafterweise außerdem dazu, dass im Endprodukt Natrium- bzw. Kaliumverunreinigungen vermieden werden.

Wie schon vorstehend ausgeführt, wurde überraschenderweise gefunden, dass die erforderlichen Temperaturen im Kalzinierungsschritt der zum erfindungsgemäß erhältlichen phasenreinen Lithiumtitanat Li₄Ti₅O₁₂ führt, im Vergleich zum Stand der Technik äußerst niedrig sind. Verglichen mit Temperaturen von mehr als 800-850 °C des Standes Technik sind erfindungsgemäß nur Temperaturen von ≤ 750 °C, vorzugsweise < 700 °C notwendig. Beispielsweise wurde schon bei einer Temperatur von 700 °C nach 15 Stunden Reaktionszeit ein sauberes Produkt erhalten (*vide infra*).

Ein weiterer Vorteil des erfindungsgemäßen Verfahrens gegenüber den üblichen Festkörpersyntheserouten zur Herstellung von Lithium-Titanspinellen besteht weiter darin, dass eine Kalzinierung weder mit LiOH·H₂O noch Li₂CO₃ durchgeführt werden muss. Beide üblicherweise verwendeten Verbindungen sind bei den verwendeten hohen Temperaturen von mehr als 850°C hochreaktiv und korrosiv und greifen daher die Wände der Reaktoren in denen die Kalzinierung vonstatten geht, stark an. Bei dem erfindungsgemäß verwendeten Li₂TiO₃ findet eine Reaktion mit den Materialien der Reaktoren nicht statt.

Bevorzugt wird das erfindungsgemäß erhältliche dotierte oder nicht dotierte Lithiumtitanat als Anodenmaterial in wiederaufladbaren Lithium-Ionen-Batterien verwendet.

Ebenso wird eine wiederaufladbare Lithium-Ionen-Batterie beschrieben, umfassend eine Anode und Kathode sowie einen Elektrolyten, wobei die Anode erfindungsgemäß erhältliches Lithiumtitanat Li₄Ti₅O₁₂ enthält.

Die Anode weist dabei eine Kapazitätsretention von mindestens 90 %, ganz besonders bevorzugt von mindestens 95 % bei einer Rate von 20 C auf und eine spezifische Ladungs-/Entladungskapazität von >160 Ah/kg.

Die Erfindung ist nachstehend anhand von Figuren und Ausführungsbeispielen näher erläutert, ohne dass diese als einschränkend verstanden werden sollen.

Es zeigen
- Figur 1: ein Röntgendiffraktogramm des erfindungsgemäß erhältlichen Lithiumtitanats
- Figur 2: eine REM-Aufnahme eines erfindungsgemäß erhältlichen Kompositoxids Li₂TiO₃/TiO₂
- Fig. 3a - 3c: REM-Aufnahmen des erfindungsgemäß erhältlichen phasenreinen Lithiumtitanats, das bei verschiedenen Kalzinierungstemperaturen erhalten wurde
- Figur 4: eine REM Aufnahme von erfindungsgemäß erhältlichem Lithiumtitanat dass bei einer Temperatur von 850 °C kalziniert wurde
- Figur 5: die Partikelgrößenverteilung eines erfindungsgemäß erhältlichen Lithiumtitanats
- Figur 6: ein Schaubild der Zyklenbeständigkeit des erfindungsgemäß erhältlichen Lithiumtitanats als Anodenmaterial
- Figur 7: Ladungs-/Entladungskurven des erfindungsgemäß erhältlichen Lithiumtitanats als Anodenmaterial.

### Auführungsbeispiele:

### 1. Allgemeine Beschreibung des erfindungsgemäßen Verfahrens

Die für das erfindungsgemäße Verfahren zur Herstellung eins Kompositoxids enthaltend x Li₂TiO₃ /y TiO₂ (x und y haben die vorstehend definierten Bedeutungen) verwendeten Verbindungen sind als Ausgangsprodukte zunächst LiOH·H₂O sowie TiO₂ in Anatasform. Ggf. werden Oxide der entsprechenden Dotierungsmetalle zugegeben. Der Wassergehalt schwankt bei kommerziell erhältlichem LiOH·H₂O (Firma Merck) von Charge zu Charge und wurde vor der Synthese bestimmt.

LiOH·H₂O wird zunächst in destilliertem Wasser gelöst und auf eine Temperatur von 50 bis 60 °C erwärmt. Nach vollständiger Auflösung des Lithiumhydroxid wird eine entsprechende Menge (je nach gewünschtem Endprodukt) festes TiO₂ in Anatasmodifikation (erhältlich von der Firma Sachtleben) unter ständigem Rühren zur 50 bis 60 °C warmen Lösung zugegeben. Nach homogener Verteilung des Anatas wird die Suspension in einen Autoklaven gegeben, wobei die Umsetzung anschließend unter andauerndem Rühren bei einer Temperatur von 100 °C bis 250 °C, typischerweise bei 150 bis 200 °C über eine Dauer von ca. 18 Stunden stattfand.

Als Autoklaven wurden Autoklaven der Firma Parr (Parr Pressure Reactive 4843) mit Doppelrührer und einer Heizwendel aus Stahl verwendet.

Nach Ende der Reaktion wird das Kompositoxid x Li₂TiO₃/y TiO₂ abfiltriert und eine REM-Aufnahme angefertigt.

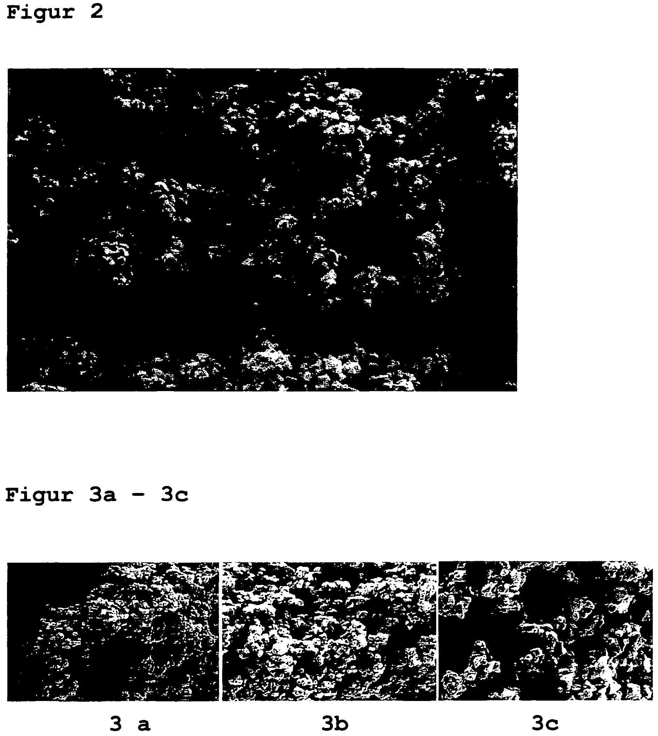

Im Falle des Kompositoxids x Li₂TiO₃ / y TiO₂ mit einem Verhältnis TiO₂/LiTiO₃ von 1,68 (Figur 2) wurde gefunden, dass während der Hydrothermalreaktion kein Partikelwachstum verglichen mit dem Ausgangsmaterial Anatas auftrat und auch keine Agglomeration der freien Primärpartikel, deren Partikelgröße im Bereich von 100 - 300 nm liegt, stattfand.

Nach Waschen des Filterkuchens wurde dieser bei 80 °C getrocknet und danach vermahlen.

Zur Vermahlung wird beispielsweise eine Luftstrahlmühle verwendet.

Anschließend wurde das erfindungsgemäß erhältliche Kompositoxid x Li₂TiO₃/ y TiO₂ kalziniert.

Es wurde gefunden dass das erfindungsgemäß erhältliche Kompositoxid durch die vorangegangene Synthese äußerst reaktiv in der sich anschließenden Umsetzung zu Lithiumtitanat war. Die Reaktionstemperaturen herkömmlicher Verfahren zur Herstellung von Lithiumtitanat ausgehend von einer rein physikalischen Mischung z.B. aus 2 Teilen Li₂TiO₃ und 3 Teilen TiO₂ werden typischerweise bei Temperaturen von > 800-850 °C und Reaktionszeiten von mehr als 15 Stunden durchgeführt.

Es wurde weiter gefunden, dass auch bei niedrigen Temperaturen, beispielsweise bei 650 °C schon nach 15 Stunden Reaktionszeit phasenreine Produkte (d. h. Lithiumtitanate) entstehen. Bei einer Temperatur von beispielsweise 750 °C entstand phasenreines Lithiumtitanat aus dem vorstehenden Kompositoxid sogar schon nach 3 Stunden.

Ein Partikelwachstum bei der Synthese des phasenreinen Lithiumtitananats verglichen mit dem Ausgangsmaterial des entsprechenden Kompositoxids wurde nicht festgestellt. Bei zunehmender Kalzinierungstemperatur nahm die Partikelgröße jedoch stark zu:

Die Figuren 3a - 3c zeigen den Einfluss der Kalzinierungstemperatur auf die Partikelgröße des Lithiumtitanats. Die Sinterungstemperaturen betrugen für Figur 3a 700 °C, für Figur 3b 750 °C und für Figur 3c 800 °C Wie aus den Figuren 3a - 3c ersichtlich ist, werden die Partikel umso größer je höher die Kalzinierungstemperatur war und umso schwerer war anschließend die Vermahlung des erhaltenen Materials.

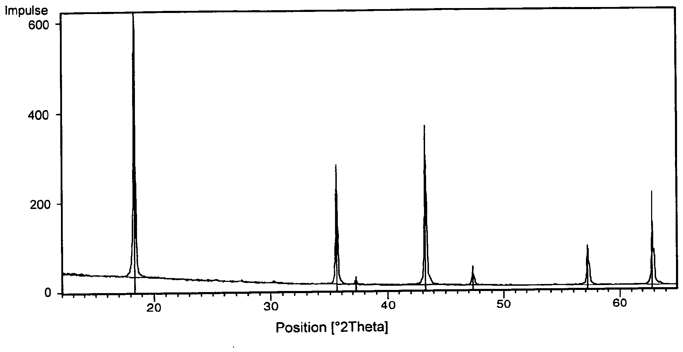

Figur 1 zeigt das Röntgendiffraktogramm einer Probe von erfindungsgemäß erhaltenem nicht-dotierten Lithiumtitanat, die bei 700 °C für 15 Stunden kalziniert wurde und zeigt nur Reflexe, die reinem Li₄Ti₅O₁₂ zugeordnet werden können. Insbesondere zeigt diese Probe keine Reflexe, die TiO₂ in der Rutil-Modifikation zugeordnet werden müssen.

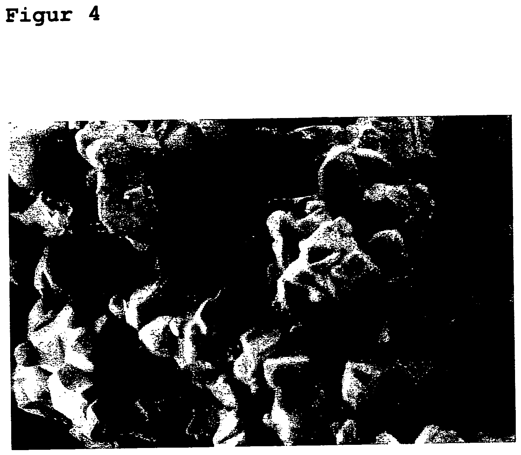

Figur 4 zeigt eine REM Aufnahme eines bei 850 °C kalzinierten nicht-dotierten Lithiumtitanats, jedoch sind die Partikel deutlich größer als diejenigen, die bei niedrigen Temperaturen erhalten wurden (s. Figur 3a-3c), so dass die Partikel stark miteinander verbacken sind und ein späterer Mahlvorgang deutlich erschwert wird.

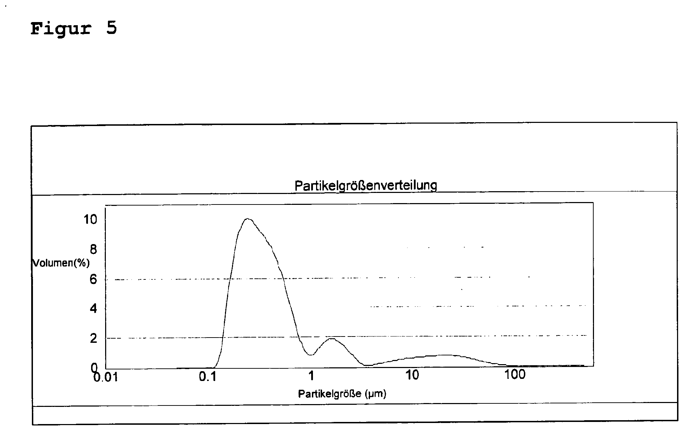

Figur 5 zeigt Messungen der Partikelgrössenverteilung von erfindungsgemäß erhältlichem Lithiumtitanat, das bei 700 °C über 15 Stunden ausgehend von einem erfindungsgemäß erhältlichen Kompositoxid 2 Li₂TiO₃ /3 TiO₂ erhalten wurde und das ein sehr feinteiliges Produkt zeigt. Der d₅₀-Wert beträgt 0,36 µm. Die grobe Fraktion mit Größen > 1 µm besteht nur aus Agglomeraten und nicht aus Primärpartikeln.

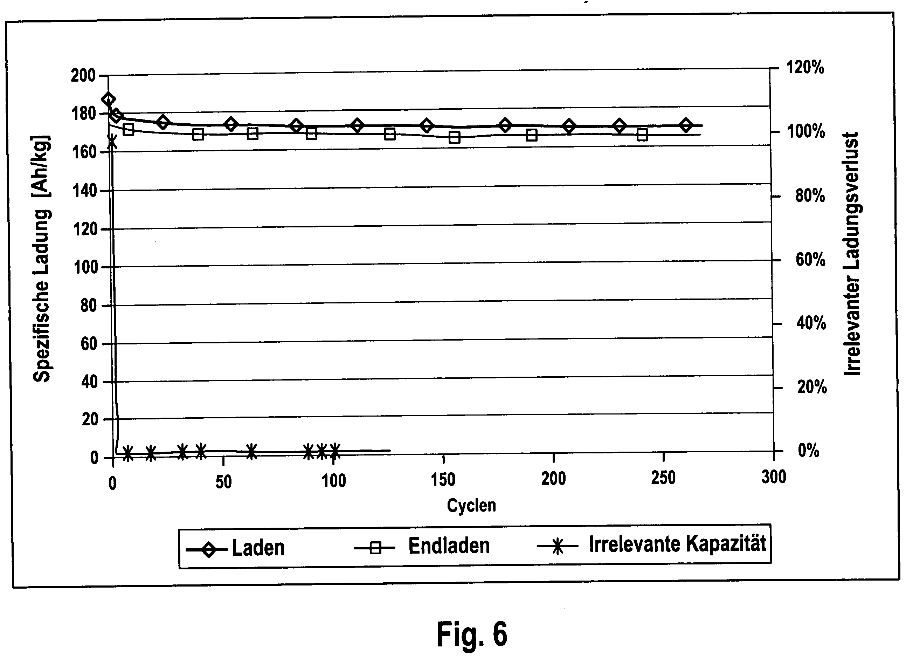

Figur 6 zeigt ein Schaubild der Zyklenbeständigkeit von erfindungsgemäß erhältlichem nicht-dotiertem Lithiumtitanat (Das Material wurde bei 750 °C während 15 Stunden kalziniert) als Anode einer Halbzelle gegen metallisches Lithium. Die Elektrodenformulierung bestand aus 85 Gew.-% Lithiumtitanat (Li₄Ti₅O₁₂), erhältlich nach dem erfindungsgemäßen Verfahren, 10 % Super P und 5 % Kynar. Der Aktivmassegehalt der Elektrode betrug 2,2 mg/cm².

Die spezifische Ladungs-/Entladungkapazität, die bei niedrigen Raten ungefähr 165 bis 170 Ah/kg erzielt wird, ist nahe dem theoretischen Wert im Gegensatz zu einem Wert von ca. 130 Ah/kg für ein Lithiumtitanat Li₄Ti₅O₁₂, das in einer herkömmlichen Festkörperreaktion aus TiO₂ und Li₂CO₃ bei hoher Temperatur erhalten wurde.

Die Kapazität und die Zyklenstabilität des erfindungsgemäß erhältlichen Li₄Ti₅O₁₂ in einer typischen Halbzelle gegen metallisches Lithium sind bemerkenswert gut bei der C-Rate mit einem durchschnittlichen Abfall ("fading") in der Größenordnung von 0,03 %/Zyklus.

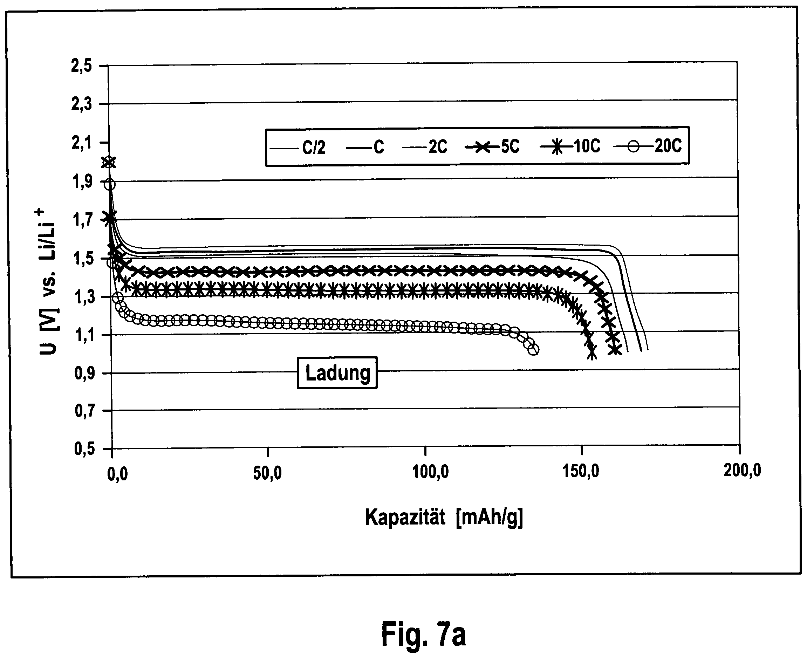

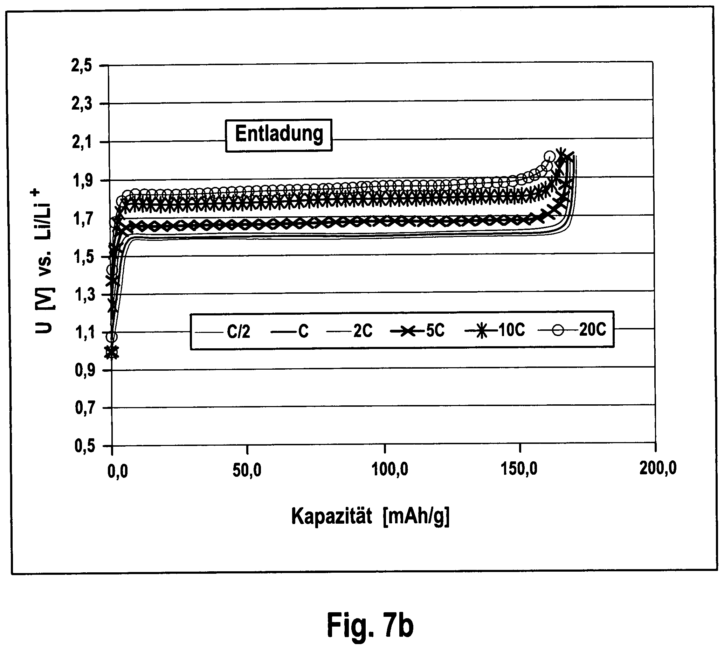

Figur 7 zeigt die Ladungs- (Fig. 7a)/Entladungskurven (7b) des erfindungsgemäß erhältlichen Lithiumtitanats (s. unter Fig. 6). Wie aus Figur 7 entnommen werden kann, zeigt eine Anode eine Kapazitätsretention bei der Entladung von 96 % selbst bei einer 20 C-Rate. Alle Zyklen der Testzellen wurden im Bereich von 1,0 V - 2,0 V bei 20 °C gefahren.

## Patentansprüche

1. Verfahren zur Herstellung von phasenreinem dotiertem oder nicht-dotiertem Lithiumtitanat Li₄Ti₅O₁₂, das die folgenden Stufen umfasst:
a) Bereitstellen einer wässrigen Lösung von LiOH,
b) Optionales Zugeben einer Verbindung vor oder gleichzeitig mit der Zugabe von festem TiO₂, die Al, Mg, Ga, Fe, Co, Sc, Y, Mn, Ni, Cr, V oder Mischungen davon enthält,
c) Umsetzen der wässrigen Lösung von LiOH nach Zugabe von festem TiO₂ bei einer Temperatur im Bereich von 100-250°C über einen Zeitraum von 15 bis 25 Stunden, wobei ein Kompositoxid erhalten wird, das x Teile Li₂TiO₃ in kubischer Phase und y Teile TiO₂ in Anatasmodifikation sowie z Teile eines Metalloxids enthält, wobei x und y unabhängig voneinander eine Zahl zwischen 0,1 und 4 sind und 0 ≤ z ≤ 1 ist und das Metall aus Al, Mg, Ga, Fe, Co, Sc, Y, Mn, Ni, Cr, V oder Mischungen davon ausgewählt ist, wobei das molare Verhältnis von TiO₂ zu Li₂TiO₃ in dem erhaltenen Kompositoxid in einem Bereich von 1,3 bis 1,85 liegt, und
d) Sintern des erhaltenen Kompositoxids bei einer Temperatur von ≤ 750°C während 1 bis 20 Stunden.

2. Verfahren nach Anspruch 1, **dadurch gekennzeichnet, dass** in Stufe c) TiO₂ in seiner Anatasmodifikation eingesetzt wird.

3. Verfahren nach Anspruch 1 oder 2, wobei vor oder gleichzeitig mit der Zugabe von festem TiO₂ weiter eine Verbindung, die Al, Mg, Ga, Fe, Co, Sc, Y, Mn, Ni, Cr, V oder Mischungen davon enthält, zugegeben wird.

4. Verfahren nach Anspruch 1, 2 oder 3, wobei das Produkt der Umsetzung aus Schritt c) anschließend abgetrennt wird.

## Claims

1. A process for the production of phase pure doped or undoped lithium titanate Li₄Ti₅O₁₂ comprising the steps of:
a) providing an aqueous solution of LiOH,
b) optionally adding a compound containing Al, Mg, Ga, Fe, Co, Sc, Y, Mn, Ni, Cr, V or mixtures thereof, before or together with an addition of solid TiO₂,
c) reacting the aqueous solution of LiOH after adding solid TiO₂ at a temperature in the range of 100-250°C over a period of 15 to 25 hours to obtain a composite oxide containing x parts cubic phase Li₂TiO₃ and y parts TiO₂ in anatase modification and z contains parts of a metal oxide, wherein x and y are independently a number between 0.1 and 4 and 0 ≤ z ≤ 1 and the metal of Al, Mg, Ga, Fe, Co, Sc, Y, Mn , Ni, Cr, V or mixtures thereof, wherein the molar ratio of TiO₂ to Li₂TiO₃ in the composite oxide obtained is in a range of 1.3 to 1.85, and
d) sintering of the resulting composite oxide at a temperature of ≤ 750°C for 1 to 20 hours.

2. The method according to claim 1, **characterized in that** in step c) TiO₂ is used in its anatase modification.

3. The method of claim 1 or 2, wherein before or together with the addition of solid TiO₂ further a compound containing Al, Mg, Ga, Fe, Co, Sc, Y, Mn, Ni, Cr, V or mixtures thereof is added.

4. The method of claim 1, 2 or 3, wherein the product of the reaction of step c) is subsequently separated.

## Revendications

1. Procédé pour la préparation de titanate de lithium Li₄Ti₅O₁₂ dopé ou non dopé en phase pure, lequel comporte les étapes suivantes :
a) préparation d'une solution aqueuse de LiOH,
b) ajout facultatif d'un composé avant ou simultanément à l'ajout de TiO₂ solide, lequel contient Al, Mg, Ga, Fe, Co, Sc, Y, Mn, Ni, Cr, V ou des mélanges de ceux-ci,
c) mise en réaction de la solution aqueuse de LiOH après ajout de TiO₂ solide à une température comprise dans la gamme allant de 100 à 250 °C sur une période de 15 à 25 heures, dans lequel un oxyde composite est obtenu, lequel contient x parties de Li₂TiO₃ en phase cubique et y parties de TiO₂ en modification anatase ainsi que z parties d'un oxyde métallique, dans lequel x et y sont indépendamment l'un de l'autre un nombre compris entre 0,1 et 4 et 0 ≤ z ≤ 1 et le métal est sélectionné parmi Al, Mg, Ga, Fe, Co, Sc, Y, Mn, Ni, Cr, V ou des mélanges de ceux-ci, dans lequel le rapport molaire de TiO₂ à Li₂TiO₃ dans l'oxyde composite obtenu se situe dans une gamme allant de 1,3 à 1,85, et
d) frittage de l'oxyde composite obtenu à une température ≤ 750 °C pendant 1 à 20 heures.

2. Procédé selon la revendication 1, **caractérisé en ce que** dans l'étape c) TiO₂ est utilisé dans sa modification anatase.

3. Procédé selon la revendication 1 ou la revendication 2, dans lequel, avant ou simultanément à l'ajout de TiO₂ solide, il est en outre ajouté un composé qui contient Al, Mg, Ga, Fe, Co, Sc, Y, Mn, Ni, Cr, V ou des mélanges de ceux-ci.

4. Procédé selon la revendication 1, la revendication 2 ou la revendication 3, dans lequel le produit de la réaction issu de l'étape c) est ensuite séparé.
